# FASCICULE DE BREVET EUROPEEN

(11) **EP 3 297 820 B1**
(45) Date de publication et mention de la délivrance du brevet: **28.04.2021**
(21) Numéro de dépôt: 16724388.0
(22) Date de dépôt: 19.05.2016
(51) Int. Cl.: B32B 5/00, B32B 5/02, B32B 7/00, B32B 7/04, B32B 7/08, B32B 7/12, B32B 15/00, B32B 15/04, B32B 27/00, B32B 27/06, B32B 27/28, B32B 27/30, B32B 1/00, B32B 3/00, B32B 3/02, B32B 3/04, B32B 3/06, B32B 3/08, B32B 3/14, B32B 3/18

(54) **STRUCTURE SANDWICH A PROLONGEMENT FORMANT UNE STRUCTURE COMPLEMENTAIRE**
SANDWICHSTRUKTUR MIT EINER EINE ZUSÄTZLICHE STRUKTUR FORMENDEN ERWEITERUNG
SANDWICH STRUCTURE HAVING AN EXTENSION FORMING AN ADDITIONAL STRUCTURE

(30) Priorité: 21.05.2015 FR 1554578
(43) Date de publication de la demande: 28.03.2018
(73) Titulaire: ArianeGroup SAS, 75015 Paris (FR)
(72) Inventeur: RICAUD, Patrick, 17180 Perigny (FR)
(74) Mandataire: Brevalex
(86) Numéro de dépôt international: PCT/EP2016/061201
(87) Numéro de publication internationale: WO 2016/184940

(56) Documents cités:
- JP-A- 2009 083 551
- US-A1- 2006 248 854
- US-A1- 2014 272 264

## Description

### Domaine de l'invention

La présente invention concerne un ensemble de structures dont au moins une première structure est une structure sandwich comportant un prolongement adapté à être utilisé comme base pour constituer une structure supplémentaire au panneau et notamment pour constituer un panneau complémentaire d'épaisseur réduite.

Une structure sandwich telle qu'un panneau composite sandwich est une structure très légère à très haute performance mécanique telle qu'utilisée dans les moyens de transport en général, comme le transport spatial, aéronautique ou ferroviaire. Une telle structure comporte une première peau en matériau composite, une âme constituée par un matériau généralement de faible densité comme une mousse, un nid d'abeille et une seconde peau également en matériau composite, lesdites première et seconde peaux étant solidarisées à l'âme de part et d'autre de l'âme. Il existe aussi des structures sandwich pour lesquelles les peaux sont réalisées avec d'autres matériaux tel le carton et l'âme en plâtre, ou pouvant aussi être fonctionnalisée par exemple pour lui donner des propriétés d'isolation thermique et/ou phonique. Dans ce cas l'âme peut être alors constitué d'un matériau tel que le balsa.

La matrice conserve la disposition géométrique des fibres et leur transmet les sollicitations auxquelles est soumis le panneau. Le matériau obtenu est ainsi léger, possède une bonne tenue en fatigue et possède de bonnes caractéristiques mécaniques dans le sens des fibres.

Les bords des structures composites sandwich peuvent être droits et dans ce cas, l'âme est apparente sur ces bords ou masquée par un matériau de bordurage tel un mastic. Les bords peuvent aussi être terminés par un retour à la peau constitué par le prolongement d'une peau qui recouvre l'âme découpée en biais et recouvre l'autre peau pour réaliser une bordure en bout de panneau d'un côté du panneau.

### Arrière plan technologique

La présente invention se place dans le cas où au moins un des bords de la structure ou panneau comporte un tel retour à la peau constituant une bordure au niveau de ce bord.

Il est connu notamment de la demande de brevet FR15 51573 déposée le 24 février 2015 d'utiliser le retour à la peau comme bordure de fixation de la structure ou panneau à une autre structure ou panneau.

Ladite demande prévoit en outre au niveau d'un bord du panneau composite une terminaison d'assemblage avec retour à la peau comportant un élément renfort intégré au panneau et longeant le bord du panneau, l'élément renfort comportant au moins une première paroi en regard d'une desdites peaux, au moins une seconde paroi en regard de l'autre desdites peaux et au moins une paroi de liaison entre lesdites première et seconde parois, la terminaison d'assemblage comportant en outre au delà de l'élément renfort une bordure de retour à la peau réalisée en solidarisant ensemble les deux peaux.

Un élément profilé formant un tasseau incliné est disposé entre l'élément renfort et la bordure où les peaux se rejoignent, ledit profilé étant muni d'une face inclinée au bord de la structure, ledit profilé formant un support de drapage incliné réalisant une face de transition permettant à la peau supérieure de venir s'appliquer sur la peau inférieure pour réaliser la bordure US 2006/248854 décrit un panneau composite muni d'une partie monolithique de fixation du panneau. La partie monolithique forme une bordure de fixation du panneau et est réalisée par un retour à la peau.

La présente invention se place dans le cas où au moins un des bords de la structure ou panneau comporte un tel retour à la peau constituant une bordure au niveau de ce bord, le panneau étant prolongé au delà de la bordure de fixation du panneau.

Un point intéressant lors du remplacement de structures métalliques par des structures sandwich composites est de donner à ces dernières des fonction supplémentaires possibles du fait de leur conception et de leur constitution ce qui valorise leur usage en plus du gain de masse qu'elles apportent par rapport aux structures métalliques.

En effet, certains procédés de fabrication de pièces en matériaux composites se prêtent bien à la fabrication de pièces très complexes, à la fois en terme de géométrie mais aussi en terme de variation de constitution ; c'est le cas des procédés utilisant des moules pour réaliser des pièces composites de forme complexe ce qui permet d'envisager de nouvelles façons d'intégrer des équipements, en particulier des supports aux pièces composites intégrés lors du procédé industriel de réalisation des pièces.

### Brève description de l'invention

La présente invention a pour objet de valoriser les structures telles que les panneaux composites et notamment de réaliser un semi-produit comportant un panneau en matériau de type sandwich et un prolongement réalisé selon l'invention par une partie monolithique de réalisation d'une paroi prolongeant la partie structurale.

La partie sandwich peut notamment être destinée à réaliser des parois, par exemple des parois de caisse d'un véhicule qu'il s'agisse d'un châssis, d'un plancher, d'une face ou du pavillon d'un tel véhicule et la partie monolithique destinée à constituer tout ou partie d'un équipement intégré.

La partie monolithique est principalement une des peaux du sandwich que l'on prolonge et son épaisseur peut être variable selon les efforts de service et d'exploitation commerciale auxquels la zone concernée est soumise.

De manière alternative il est possible de prolonger deux peaux du sandwich et de les joindre, ce qui permet ainsi d'obtenir une structure monolithique en terminaison de panneau ou structure.

Dans ce cas on utilise le retour à la peau de bord de panneau comme base pour la réalisation de structures complémentaires et dans ce cas, la présente invention propose une structure comportant un panneau composite sandwich pourvu de peaux en matériau composite pour laquelle au moins un bord du panneau comporte un retour à la peau constitué par un prolongement des peaux au delà du bord de l'âme, les peaux étant appliquées l'une sur l'autre et solidarisées l'une à l'autre.

Dans ce cadre, la présente invention propose un ensemble de structures (110, 111, 112, 113, 114, 300, 400) selon la revendication 1 dont au moins une première structure est une structure composite (110, 111, 112, 113, 114) comportant un panneau composite sandwich (1), constitué d'une première peau (10) et d'une seconde peau (11) de part et d'autre d'une âme (12), caractérisé en ce que ladite première structure comporte au moins un prolongement d'un bord du panneau composite sandwich réalisé par une partie monolithique formant une paroi simple (101, 102, 103, 104, 105, 106) prolongeant le panneau composite sandwich au delà d'une bordure de fixation du panneau, ladite paroi simple formant un panneau complémentaire d'épaisseur réduite par rapport au panneau composite sandwich (1) pour lequel ladite paroi simple (101) de ladite première structure vient s'appliquer sur une face (11") de l'autre des structures à distance d'une partie de jonction (130) entre lesdites structures, ladite paroi simple étant conformée pour s'écarter de ladite face et réaliser un conduit (202, 203) ou un caisson dont des parois sont formées de ladite paroi simple et ladite face (11") de l'autre des structures.

Selon un premier mode de réalisation, ladite paroi simple est réalisée par une des peaux du panneau composite sandwich qui se prolonge au delà du bord du panneau composite sandwich.

Selon un deuxième mode de réalisation, la partie monolithique est réalisée par un prolongement des deux peaux du panneau composite sandwich jointes ensemble.

Selon un troisième mode de réalisation, le prolongement est issu d'un retour à la peau de bord de panneau, les peaux étant appliquées l'une sur l'autre et solidarisée l'une à l'autre et servant de base pour la réalisation de ladite paroi simple.

Ledit retour à la peau forme avantageusement une bordure d'appui et/ou de fixation de la structure et est prolongé pour former ladite paroi simple.

Le panneau composite sandwich peut avantageusement comporter au moins un profilé entre les peaux adapté à recevoir un ou plusieurs organes de fixation d'un élément de structure complémentaire.

Alternativement ou de manière complémentaire, le panneau composite sandwich peut comporter au moins un élément renfort de terminaison de panneau en bord du panneau composite sandwich.

L'invention prévoit en outre un ensemble de structures composites comme décrit auparavant comportant au moins deux structures composites pourvues chacune d'un panneau composite sandwich et d'une paroi simple prolongeant une première peau dudit panneau composite sandwich, pour lequel la paroi simple de chacune des première et seconde structures vient s'appliquer sur la seconde peau du panneau composite sandwich de l'autre des structures, et pour lequel un caisson est réalisé entre les terminaison desdits panneaux composites sandwich et lesdites parois simples.

Avantageusement, au moins le panneau sandwich d'une première desdites structures comporte au moins un insert entre ses peaux, la paroi simple d'une seconde desdites structures composites venant se fixer sur ledit insert au travers de la seconde peau de ladite première desdites structures composites.

La seconde des structures comporte avantageusement un panneau composite sandwich pourvu d'au moins un profilé, ladite paroi simple venant se fixer sur ledit profilé au travers d'une peau du panneau composite sandwich de la seconde des structures.

### Brève description des dessins

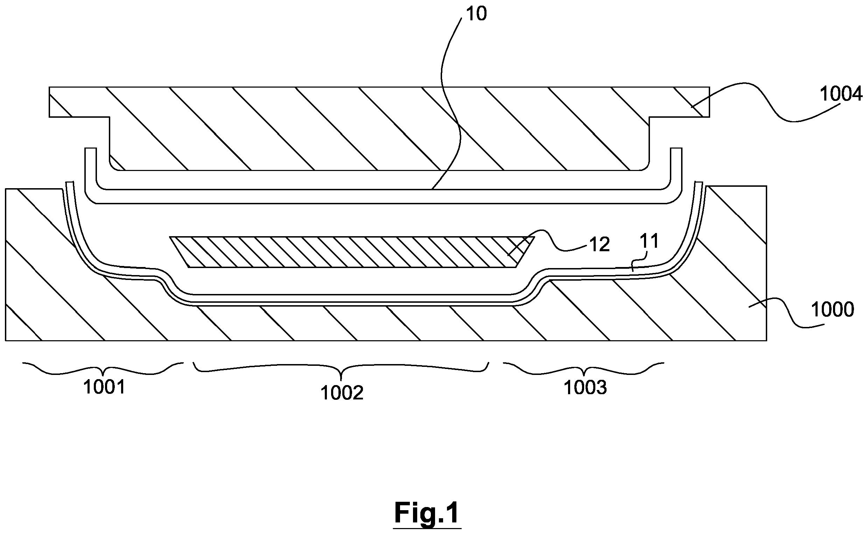

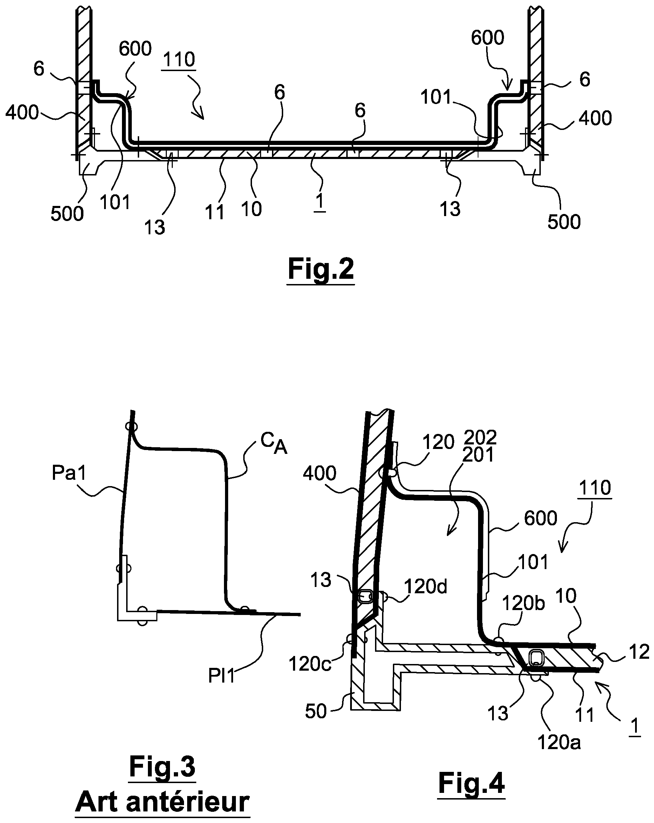

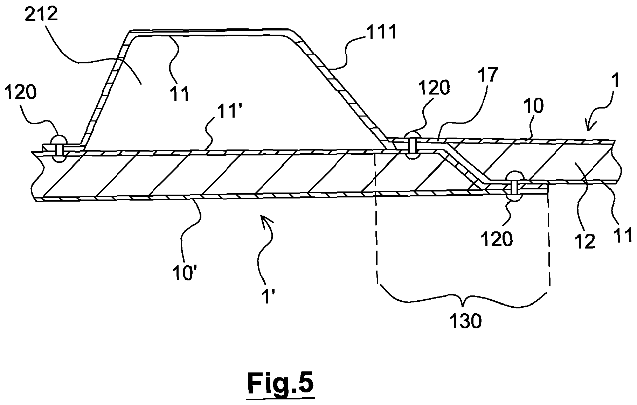

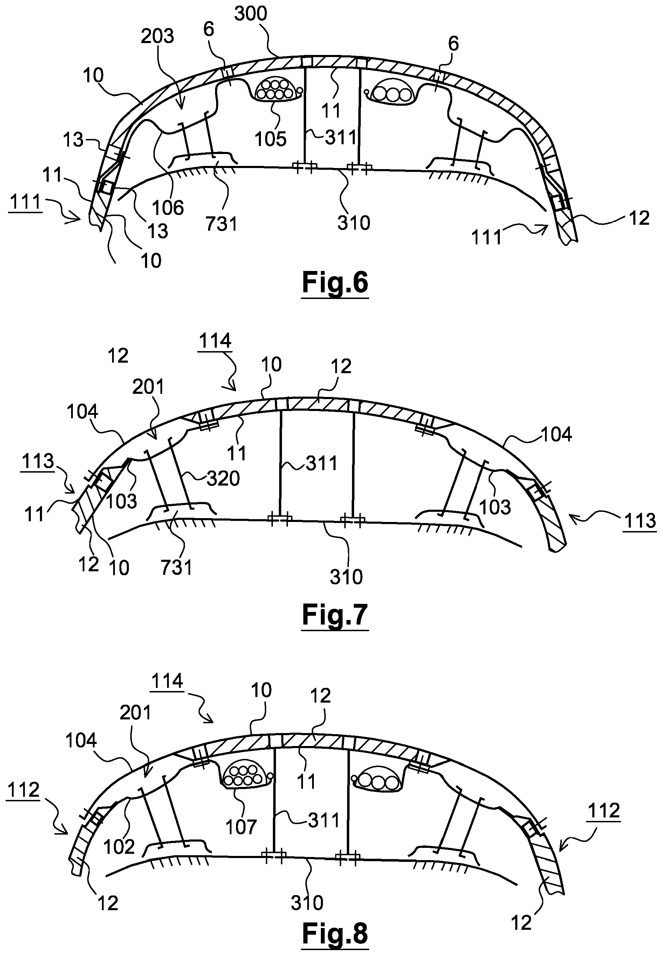

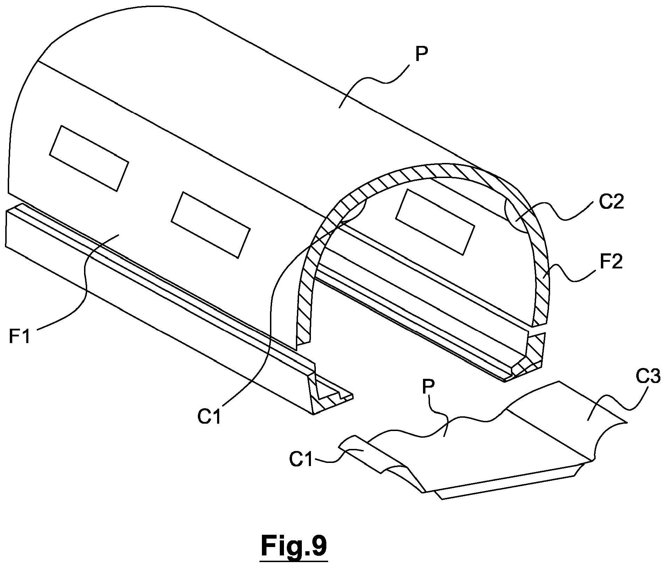

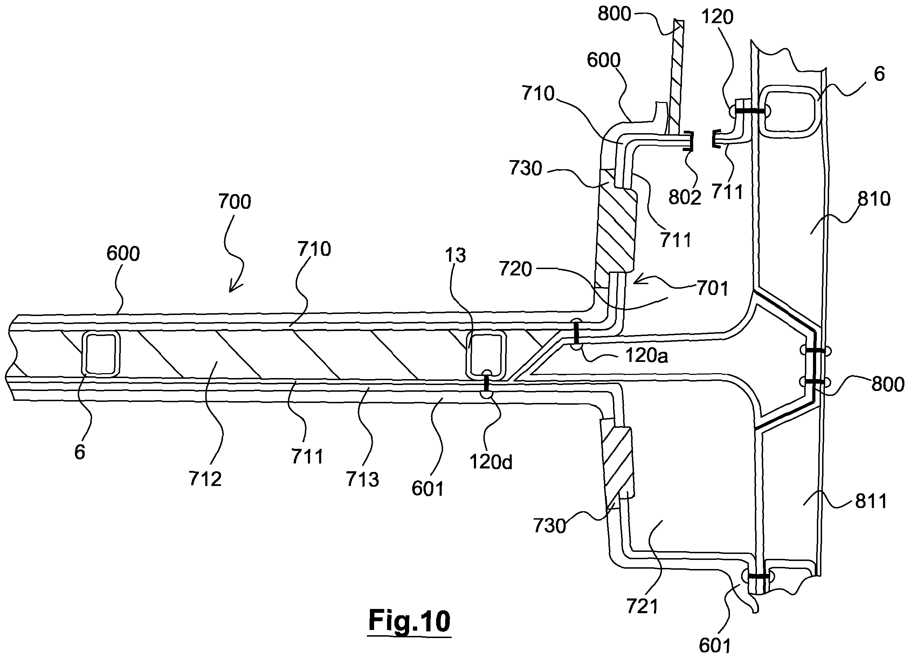

D'autres caractéristiques et avantages de l'invention seront apparents à la lecture de la description qui suit d'un exemple non limitatif de réalisation de l'invention en référence aux dessins qui représentent:
en figure 1: une vue schématique de la réalisation d'une structure utilisée dans l'invention;
en figure 2: une vue schématique en coupe transversale d'une première application de l'invention;
en figure 3: un détail d'un caisson de l'art antérieur;
en figure 4: un détail de la figure 2 selon l'invention;
en figure 5: une vue schématique en coupe transversale d'une deuxième application de l'invention;
aux figures 6 à 8: des vues en coupe transversale des variantes d'une troisième application de l'invention;
en figure 9: une vue schématique générale des constituants d'une caisse de véhicule selon plusieurs aspects de l'invention.
en figure 10: un autre exemple d'application de l'invention en coupe transversale.

### Description détaillée de modes de réalisation de l'invention

Comme vu plus haut, la présente invention a pour but de permettre de profiter du remplacement de panneaux métalliques par des structures sandwich composites pour utiliser ces dernières comme base pour apporter des fonctions supplémentaires possibles du fait de leur conception et de leur constitution afin d'accroître leur valorisation au delà du gain de masse qu'elles apportent par rapport aux structures métalliques.

Ceci est rendu possible dans le cadre du moulage de pièces composites qui permet de disposer par exemple des parties d'âme de manière discontinue sur une première peau puis de déposer une seconde peau tant sur les parties d'âmes que sur la première peau aux endroits dépourvus des dites parties d'âme.

La figure 1 illustre un exemple de réalisation d'une structure composite utilisée dans l'invention pour lequel une âme 12 est positionnée sur une partie d'une première peau 11 drapée ou disposée sur une première partie de moule 1000 définissant des zones d'épaisseur fine 1001, 1003 et d'épaisseur plus importante 1002 de la structure.

Une seconde peau 10 est ensuite déposée par drapage ou autre sur l'âme dans la zone de forte épaisseur 1002 et sur la première peau dans les zones 1001, 1003 d'épaisseur fine.

Les zones d'épaisseur fine sont des zones où la structure ne comporte pas d'âme entre les peaux 10, 11 et est une partie de panneau monolithique.

Comme représenté, cette partie monolithique peut ne pas être plane et réaliser une pièce de forme variable assurant une fonction particulière comme dans l'exemple représenté et expliqué plus loin où la pièce permet de réaliser un conduit d'air conditionné ou une gaine routage de câble ou de tuyauteries par exemple.

Une partie de fermeture du moule 1004 est appliquée sur la seconde peau et le moulage se fait de manière traditionnelle par polymérisation sous vide par exemple.

Une première application de l'invention telle que représentée en figure 2 peut notamment être la réalisation d'une structure telle qu'un plancher 110 comportant un panneau composite sandwich 1 constitué d'une première peau 10 et d'une seconde peau 11 de part et d'autre d'une âme 12 qui comporte au moins un prolongement d'un bord du panneau composite sandwich réalisé par la partie monolithique formant une paroi simple 101 prolongeant le panneau composite sandwich latéralement et dans l'exemple réalisant un conduit par exemple.

La paroi simple forme alors un panneau complémentaire d'épaisseur réduite par rapport au panneau composite sandwich et en continuité d'une face de ce panneau sandwich.

Par rapport à un art antérieur pour lequel un conduit est réalisé par une tôle C_{A} fixée sur un panneau latéral Pa₁ et un plancher Pl₁ comme représenté en figure 3, la présente invention a pour avantage de réaliser une continuité entre le conduit et le plancher et de réaliser en une seule opération la pose du plancher et de son ou de ses conduits.

La figure 4 représente un détail agrandi de la figure 2 au niveau du conduit 202 réalisé par la paroi monolithique incurvée 101 qui prolonge la face supérieure du panneau composite 1 constitué avec les peaux 10, 11 et l'âme 12.

Dans cette exemple, la partie monolithique est réalisée par un prolongement des deux peaux 10, 11 du panneau composite sandwich jointes ensemble.

Le prolongement est issu d'un retour à la peau 17 de bord de panneau, les peaux 10, 11 étant appliquées l'une sur l'autre et solidarisée l'une à l'autre pour servir de base pour la réalisation de ladite paroi simple 101.

Le haut du conduit réalisé par la paroi simple se fixe sur le panneau latéral 400, qui est ici un second panneau composite, avec des moyens de fixation 120 adaptés, par exemple des rivets aveugles.

Le panneau latéral 400 et le plancher 110 se fixent sur un profil structural longitudinal ou poutre en forme de cornière 500 et comportent pour ce faire des retours à la peau renforcés par des profilés 13 de terminaison de panneau en bord du panneau composite sandwich.

Les deux profils structuraux 500 présents sur les deux côtés de la caisse peuvent notamment être constitué par des éléments structurels longitudinaux du châssis tels que des brancard au droit du bogie.

Les profilés 13 reçoivent une rangée de moyens de fixation 120a, 120d adaptés entre les panneaux et une première aile du profil structural longitudinal alors qu'une seconde rangée de fixations est réalisée entre les parties monolithiques de retour à la peau et une seconde aile sur une partie en caisson dudit profil.

Pour sa part, la partie composite du panneau 1 comporte des inserts longitudinaux 6de renfort ou de fixation d'accessoires ou dans le cas d'un plancher d'une caisse de voiture ferroviaire ou d'autocar de fixations de sièges par exemple.

Concernant plus particulièrement les planchers des voitures de train notamment, on y trouve souvent installées des gaines aérauliques lorsqu'un soufflage d'air conditionné est prévu en bas des faces des caisses. Ces gaines de type long pan métalliques rapportées servent à alimenter des éjecto-convecteurs se situant au droit de chaque baie ou fenêtre. Un revêtement de sol notamment collé couvre et habille ces gaines munies de grilles d'inspection et de soufflage. Ces gaines long pan peuvent aussi parfois servir de support de sièges, dès lors que leur structure intérieure peut en assurer la résistance mécanique requise. Classiquement, et en lien direct avec l'architecture métallique des structures, ces équipements et aménagements sont rapportés sur la structure des caisses métalliques par des liaisons démontables ou non. Toutes ces opérations d'assemblages doivent prendre en compte nombre d'exigences, ce qui peut grever les coûts de réalisation, de maintenance, et compliquer l'industrialisation des productions.

Dans l'exemple de la figure 2, les conduits 201 remplissent la fonction des gaines aérauliques pour distribuer l'air de la climatisation de la voiture.

Un autre exemple de structure composite selon l'invention est représenté à la figure 5 pour laquelle une jonction 130 entre deux retours à la peau tête bèches de deux panneaux 1, 1' est réalisée avec des moyens de fixation 120, un des panneaux comportant un prolongement 111 prolongeant le retour à la peau pour réaliser une paroi monolithique réalisant ici un caisson 212 ou un raidisseur.

Dans cet exemple le prolongement formant la paroi est réalisée par une des peaux 11 du panneau composite sandwich qui se prolonge au delà du bord du panneau composite sandwich alors que la seconde peau 10 de ce panneau s'arrête au niveau du retour à la peau de fixation dudit panneau.

Dans les cas des figures 4 et 5, le retour à la peau 17 forme aussi une bordure d'appui et/ou de fixation de la structure qui est prolongée pour former ladite paroi simple.

L'exemple de la figure 6 prévoit une liaison du type de la figure 5 pour laquelle un panneau 300 est courbe. Selon cet exemple, le panneau courbe constitue un pavillon structurel de caisse de véhicule sans prolongement alors que le panneau 111 comporte un prolongement. Ce prolongement comporte une première partie 106 s'éloignant du panneau de pavillon puis revient s'appliquer sur ce panneau pour permettre de réaliser un conduit 203 tel qu'un conduit de climatisation. Il comporte au de la de la première partie une seconde partie 105 conformée en gouttière de réception de câbles ou d'une tuyauterie s'étendant longitudinalement dans la caisse du véhicule.

D'autres applications sont possibles pour les prolongement qui seront conformés en conséquence.

Dans l'exemple de la figure 7 au moins deux structures composites 113, 114 soit ici le pavillon et les côtés d'une caisse de véhicule appelés faces de la caisse dans le domaine ferroviaire sont pourvues chacune d'un panneau composite sandwich 1 et d'une paroi simple 103, 104 prolongeant une première peau 10 dudit panneau composite sandwich. La paroi simple de chacune des première et seconde structures vient s'appliquer sur la seconde peau 11 du panneau composite sandwich de l'autre des structures et s'y fixer ce qui solidarise les structures ensemble.

De la sorte les parties composites des structures sont tenues à distance et un caisson 201 est réalisé entre les terminaison desdits panneaux composites sandwich et lesdites parois simples.

Dans le cas de la figure 8, le panneau monolithique d'une des structure se prolonge par une gouttière 107. De manière alternative, la gouttière peut être rapportée et se fixer avec l'extrémité libre du panneau monolithique 102 sur la structure opposée.

Au moins le panneau composite sandwich d'une première desdites structures comporte au moins un insert 6, 13 entre ses peaux 10, 11, la paroi simple d'une seconde desdites structures composites venant se fixer sur ledit insert au travers de la seconde peau 11 de ladite première desdites structures composites.

Dans le cas des figures 6 à 8 notamment, les inserts sont d'une part des profilés 13 au niveau des retours à la peau et des profilés 6 en cœur de panneaux.

Pour la figure 6, la paroi simple 106 d'une première structure 111 vient s'appliquer sur une face 11 de l'autre 300 des structures à distance d'une partie de jonction entre lesdites structures.

La seconde 300 des structures comporte un panneau composite sandwich pourvu d'au moins un profilé 6, ladite paroi simple venant se fixer sur ledit profilé au travers d'une peau du panneau composite sandwich de la seconde des structures.

L'invention s'applique particulièrement à une caisse de véhicule de transport schématisée en figure 9 et comportant des faces latérales F1, F2 et un pavillon P et dont les flancs latéraux et le pavillon sont réalisées au moyens de panneaux composites pour laquelle au moins l'un desdits panneaux composites est constitué d'une structure composite selon l'invention comme dans le cas des figures 6 à 8.

Dans ce cas, au moins l'une des faces 111, 112, 113 est constitué d'une dite structure composite et comporte un prolongement 105, 106 longeant une partie du pavillon pour former avec ledit pavillon un conduit longitudinal C, 201, 203 dans la caisse et/ou une gouttière longitudinale 105 de passage de câbles ou de conduits.

Il est possible ainsi de former entre le pavillon et les faces des conduits 201 à parois simples comme en figure 7 ou des conduits dont une paroi est une partie de panneau composite 300 et l'autre paroi une paroi simple 106 comme en figure 6.

Dans le cas des figures 7 et 8, le pavillon de la caisse de véhicule est une structure composite 114 comportant deux parois simples 104 prolongeant le panneaux composite sandwich du pavillon sur ses côtés en regard des flancs ou faces pour réaliser le toit de la caisse.

Les panneaux sandwich du pavillon et les faces ou flancs comportent des bords avec retour à la peau pourvus de profilés 13, en regard les uns des autres, la fixation entre les faces et le pavillon étant réalisée au niveau des profilés.

Le pavillon de la caisse de véhicule de transport selon les figures 6 à 8 comporte en outre des inserts longitudinaux 6 de support d'un plafond ou élément de plafond 310 de la caisse.

Une caisse de véhicule de transport comme une voiture de train peut combiner un plancher 110, des longerons 500 appelés dans le domaine ferroviaire brancards ou longrines de support de bords latéraux du plancher, des flancs ou faces latérales 111, 112, 113 et un pavillon 114, 300 selon les exemples représentés aux figures 2 et 6 à 8 pour constituer la caisse de voiture de la figure 9 pré-équipée de ses conduits de ventilation, caissons techniques et supports de câbles et tuyauteries.

Le plancher est réalisé alors avec au moins un panneau composite sandwich 1 s'étendant latéralement jusqu'aux longerons formant les brancards ou longrines 500 et constitué d'une peau supérieure 10 et d'une peau inférieure 11 de part et d'autre d'une âme 12.

Le panneau composite sandwich comporte au moins un prolongement 101 à double courbure réalisé par une partie monolithique formant une paroi simple. Cette paroi simple possède une épaisseur réduite par rapport au panneau composite sandwich et prolonge la face supérieure du panneau composite sandwich.

Ladite paroi simple forme avec une partie inférieure d'une face latérale les parois d'un caisson latéral 202 à l'intérieur de la caisse.

La présente invention se place dans le cadre de d'une recherche d'optimisation de la masse des éléments constituant une voiture de train ou autre véhicule de type ferroviaire, de réduire le nombre de pièces élémentaires, de rendre les solutions flexibles, modulaires et standardisées, de faciliter la réalisation de sous ensembles pré-équipés, de garantir une bonne tenue au vieillissement et à la corrosion du matériel.

pour fabriquer la voiture, on réalise la structure du plancher en une seule pièce en matériau composite, sous forme de matériau sandwich, mais éventuellement sous forme monolithique raidie, on réalise tout ou partie des faces de la caisse du véhicule en matériau composite sandwich, mais éventuellement sous forme monolithique éventuellement raidie, on prolonge une ou deux des peaux du plancher en matériau composite sandwich de façon à réaliser une forme apte à remplir la fonction de conduit aéraulique sur les côté du plancher, on finalise les équipements par des fixations autant que nécessaire, éventuellement, on donne au plancher une capacité d'isolation phonique et thermique en choisissant une âme adaptée pour le matériau sandwich.

Ce faisant, on diminue le nombre de pièces constituant la structure de caisse et les équipements, facilitant ainsi leur montage, leur coût et les frais logistiques et de maintenance associés, et permettant aussi le pré équipement du plancher, lui assurant ainsi la possibilité d'intégrer des fonctions périphériques telles qu'en particulier gaine de ventilation, revêtement de sol, support d'équipements (sièges, tablettes,...)

D'autre part, le coût d'usage du véhicule se trouve amélioré sur toute la durée de vie du produit grâce en particulier à des opérations de maintenance facilitées.

Dans le cadre de ce qui précède, les exemples des figures 2, 6-8 et 10 illustrent le cas de figure où des panneaux sandwich comportent des prolongements d'au moins une de leurs peaux permet de créer un caisson à même de recevoir l'air conditionné de la voiture et qui circule à une vitesse d'environ 6 m/s. Les panneaux assurent ainsi la fonction aéraulique de la voiture en pouvant en outre réaliser d'autres fonctions telles qu'une isolation thermique, une isolation acoustique et le support d'équipements embarqués (sièges, tablettes en vis-à-vis, colonnes de maintien, cloisons transversales, ...).

Dans le cas de la figure 2, le plancher structurel 6 est par exemple constitué d'un sandwich de 50 mm d'épaisseur en matériau composite constitué de rives longitudinales monolithiques 10, 11 d'une épaisseur de 6 mm assurant la fonction aéraulique.

Ce plancher intègre par ailleurs des renforts 6 eux-mêmes composite d'une section tubulaire d'environ 45 x 45 mm et un matériau d'âme 12 isolant thermique et acoustique, par exemple en mousse PET.

Les renforts 6 permettent de recevoir des fixations d'aménagements intérieurs tels que des sièges, tablettes en vis-à-vis, colonnes de maintien, cloisons transversales, caissons, estrades et l'interface mécanique avec la structure primaire de caisse.

L'ensemble de ce plancher est fixé mécaniquement sur les longerons support 500, l'ensemble faisant éventuellement partie intégrante d'une caisse multi matériaux.

Le revêtement de sol 600 par exemple en dalles élastomère, lés en PVC thermosoudés ou moquette est rapporté collé ou fixé de manière amovible dans le cas d'une moquette sur la peau 10 ici en recouvrant les parties de conduit en paroi simple 101.

L'étanchéité de ce revêtement de sol est assurée par l'intermédiaire d'un produit adapté aux sujétions de maintenance du ferroviaire, par exemple la résistance aux produits lessiviels à base d'acide oxalique dilué est par exemple.

L'étanchéité des liaisons à la source, notamment dans le cas de revêtement de sol discontinu comme des dalles élastomère est privilégiée, ainsi qu'au niveau de tous les interfaces source d'infiltration potentiels, par exemple les fixations de sièges.

L'étanchéité aéraulique du circuit est par ailleurs assurée par interposition de produit hydrophobe comme une mousse à cellules fermées ou permettant un drainage de la condensation à l'interface lors du montage en caisse, par exemple un produit connu sous la référence « F800 FR ALG-01 drain » de la société CELLOFOAM ayant par ailleurs un excellent classement Feu / Fumées / Toxicité selon normes EN 45.545-2 (classification HL3-R1), FMVSS 302, DIN 75 200, ISO 3795 (vitesse de brûlage ≈ 100 mm/mn).

Dans le cas des figures 6 à 8, les conduits 201, 203 conduisent l'air soufflé par un dispositif de climatisation traditionnel dans les voitures de train et distribuent cet air dans la voiture par des bouches d'aération 731 disposées de place en place dans le plafond 310 de la caisse et reliées aux conduits 201, 203 par des conduits tubulaires rapportés 320 s'insérant dans des ouvertures réalisées dans la peau 106 des conduits 201, 203.

Le plafond de la caisse est selon ces exemples suspendu au pavillon 114, 300 par des tiges 311 fixées sur des renforts 6 intégrés dans le pavillon.

La figure 10 présente un autre exemple d'application de l'invention à la fonction aéraulique et concerne le cas de figure d'un plancher intermédiaire d'une caisse de train à deux niveaux.

Selon cet exemple, le plancher intermédiaire 700 est constitué d'un panneau sandwich 710, 711, 712 dont le prolongement des deux peaux 710, 711 permet de créer le circuit aéraulique 730 de la salle voyageur de niveau supérieur.

Dans cet exemple une troisième peau 713 est conformée pour réaliser le plafond de la salle voyageur de niveau inférieur et des conduits latéraux supérieurs 721 de cette salle et d'y intégrer une fonction complémentaire liée à la salle basse, conduits aérauliques de l'air conditionné / soufflage, volets ou autres.

Selon l'exemple représenté la peau 713 recouvre toute la largeur du panneau 700 et est par exemple moulée directement avec le panneau. Il est possible toutefois dans le cadre de l'invention de rapporter cette peau et de l'arrêter sur les bords du panneau par exemple en recouvrant uniquement la zone de fixation avec les rivets 120d.

Comme pour l'exemple de configuration défini en figure 2, ce type de solution permet de minimiser le nombre de pièces et l'intégration de la fonction aéraulique car traitant en même temps les aménagements intérieurs plancher intermédiaire, Plafond de la salle basse, luminaire central, liseuses rapportées sur les gaines d'air conditionné de la salle inférieure ainsi que les fonctions d'isolation thermique, d'isolation acoustique, supporter le revêtement de sol 600 de la salle haute, recevoir un revêtement de plafond de la salle basse 601.

La composition du plancher structurel 700 est constituée par exemple par un sandwich de 50 mm d'épaisseur en matériau composite à hautes performances comportant des peaux 710, 711 de 3 mm pour réaliser des rives longitudinales monolithiques d'une épaisseur de 6 mm assurant la fonction aéraulique. Le sandwich intègre des renforts 6, 13 eux-mêmes composite d'une section tubulaire d'environ (45 x 45 mm).

Le matériau d'âme 712 isolant thermique et acoustique est par exemple une mousse PET telle que la mousse commercialement connue sous la dénomination Armaform AC80(W) de la société Armacell.

Le revêtement de sol est ici aussi réalisé en dalles élastomère, lés en PVC thermosoudés ou moquette est rapporté collé ou fixé de manière démontable dans le cas d'une moquette de véhicules de 1° classe par exemple. Les principes d'étanchéité peuvent être réalisés grâce à l'usage des produits déjà référencés pour l'exemple de la figure 2 précédemment décrit.

L'ensemble de ce plancher intégrant les conduits d'air traité est fixé mécaniquement sur des rives longitudinales formées par des longerons 800 formant des brancards ou longrines intermédiaires entre l'étage inférieur et l'étage supérieur des faces de la caisse et faisant office de ceinture de caisse sur laquelle les panneaux supérieur et inférieur 810, 811 des faces sont fixés comme pour les exemples précédents au niveau de leurs retours à la peau.

Des bouches d'aération 730 sont disposées de place en place le long des conduits 720 dans des ouvertures desdits conduits pour distribuer l'air dans la voiture.

Dans cet exemple, des ouvertures verticales 802 dans le conduit 720 permettent de distribuer l'air climatisé entre des panneaux de couverture 801 à l'intérieur de la caisse par exemple pour faire déboucher de l'air le long des fenêtres de la voiture.

Sous le plancher intermédiaire des seconds conduits de plafond 721 distribuent l'ait climatisé par des secondes bouches d'aération 730 de place en place le long des seconds conduits.

Un revêtement de plafond 601 recouvre la face inférieure du plancher intermédiaire.

Le procédé d'assemblage de la structure de caisse est compatible avec la définition de tels sous-ensembles de manière à permettre le pré assemblage du plancher intermédiaire avant de terminer le montage de la 2° face du véhicule.

L'étanchéité aéraulique du circuit est par ailleurs assurée par interposition de produits similaires à ceux déjà décrits dans l'exemple de la figure 2.

Par ailleurs, et compte tenu du nœud de liaison de ce plancher intermédiaire intégrant les circuits aéraulique, une étanchéité particulièrement soignée est réalisée via notamment l'application à l'interface d'un mastic adapté aux conditions de service les plus sévères (température, hygrométrie, dilatation différentielle, couple électrolytique alu/peaux carbone par exemple).

Selon ces conditions d'usage en service commercial, plusieurs types de mastic peuvent être potentiellement utilisés, citons à titre d'exemple les familles:
MS Polymer (ex : ISR 70-03 de la société Bostik)
Polyuréthane (Sikaflex 265) ou autre mastic étanche.
L'ensemble fait éventuellement partie intégrante d'une caisse multi matériaux.

L'invention n'est pas limitée aux exemples représentés et notamment les profilés 6 entre les peaux adaptés à recevoir un ou plusieurs organes de fixation d'un élément de structure complémentaire peuvent aussi servir de moyens de fixation pour des habillages ou équipements intérieurs voir même des supports de sièges dans le cas du plancher de la figure 2 et du plancher intermédiaire de la figure 10.

La circulation d'air se fait dans le conduit supérieur 720 qui alimente des bouches d'aération 730 qui comportent ici des lamelles dirigeant l'air vers le haut et des passages 811 allant vers des éjecto-convecteurs sous fenêtres de l'étage haut et dans le conduit inférieur 721 qui alimente des bouches d'aération hautes 730 pourvues de lamelles dirigeant le flux d'air vers le bas dans l'étage bas.

Les conduit formées entre la paroi simple et une autre structure peuvent être des conduits étanches et peuvent également intégrer des fonctions d'isolation thermique et/ou acoustique de par leur constitution.

L'invention particulièrement applicable à la réalisation de voitures de train voyageurs, de métro, de tram ou autre véhicule en association avec un châssis inférieur en interface avec des bogies n'est pas limitée à l'exemple représenté et est mais peut être utilisée pour réaliser une partie supérieure de fuselage d'aéronef, d'un autocar, de caisses de caravanes ou maisons roulantes (mobile home en anglais). Dans ces applications les longerons 500 peuvent faire partie d'une ceinture de renfort de caisse du véhicule.

## Revendications

1. Ensemble de structures (110, 111, 112, 113, 114, 300, 400) dont au moins une première structure est une structure composite (110, 111, 112, 113, 114) comportant un panneau composite sandwich (1), constitué d'une première peau (10) et d'une seconde peau (11) de part et d'autre d'une âme (12), **caractérisé en ce que** ladite première structure comporte au moins un prolongement d'un bord du panneau composite sandwich réalisé par une partie monolithique formant une paroi simple (101, 102, 103, 104, 105, 106) prolongeant le panneau composite sandwich au delà d'une bordure de fixation du panneau, ladite paroi simple formant un panneau complémentaire d'épaisseur réduite par rapport au panneau composite sandwich (1) pour lequel ladite paroi simple (101) de ladite première structure vient s'appliquer sur une face (11") de l'autre des structures à distance d'une partie de jonction (130) entre lesdites structures, ladite paroi simple étant conformée pour s'écarter de ladite face et réaliser un conduit (202, 203) ou un caisson dont des parois sont formées de ladite paroi simple et ladite face (11") de l'autre des structures.

2. Ensemble de structures selon la revendication 1 pour laquelle ladite paroi simple est réalisée par une des peaux (10) du panneau composite sandwich qui se prolonge au delà du bord du panneau composite sandwich.

3. Ensemble de structures selon la revendication 1 pour laquelle la partie monolithique est réalisée par un prolongement des deux peaux (10, 11) du panneau composite sandwich jointes ensemble.

4. Ensemble de structures selon la revendication 3 pour laquelle le prolongement est issu d'un retour à la peau (17) de bord de panneau, les peaux (10, 11) étant appliquées l'une sur l'autre et solidarisée l'une à l'autre et servant de base pour la réalisation de ladite paroi simple (101, 102, 103, 104, 105, 106).

5. Ensemble de structures selon la revendication 4 pour laquelle ledit retour à la peau (17) forme une bordure d'appui et/ou de fixation de la structure et est prolongé pour former ladite paroi simple.

6. Ensemble de structures selon l'une quelconque des revendications précédentes pour laquelle le panneau composite sandwich comporte au moins un profilé (6) entre les peaux adapté à recevoir un ou plusieurs organes de fixation d'un élément de structure complémentaire.

7. Ensemble de structures selon l'une quelconque des revendications précédentes pour laquelle le panneau composite sandwich comporte au moins un élément renfort (13) de terminaison de panneau en bord du panneau composite sandwich.

8. Ensemble de structures selon l'une quelconque des revendications précédentes comportant au moins deux structures composites (110, 111, 112, 113, 114) pourvues chacune d'un panneau composite sandwich (1) et d'une paroi simple (101, 102, 103, 104, 105, 106) prolongeant une première peau (10) dudit panneau composite sandwich, pour lequel la paroi simple de chacune des première et seconde structures vient s'appliquer sur la seconde peau (11) du panneau composite sandwich de l'autre des structures, et pour lequel ledit caisson (201) est réalisé entre les terminaison desdits panneaux composites sandwich et lesdites parois simples.

9. Ensemble de structures selon la revendication 8 pour lequel au moins le panneau composite sandwich d'une première desdites structures comporte au moins un insert (6, 13) entre ses peaux (10, 11), la paroi simple d'une seconde desdites structures composites venant se fixer sur ledit insert au travers de la seconde peau (11) de ladite première desdites structures composites.

10. Ensemble de structures selon l'une quelconque des revendications précédentes pour lequel la seconde des structures comporte un panneau composite sandwich pourvu d'au moins un profilé (6), ladite paroi simple venant se fixer sur ledit profilé au travers d'une peau du panneau composite sandwich de la seconde des structures.

## Patentansprüche

1. Anordnung von Strukturen (110, 111, 112, 113, 114, 300, 400), von denen zumindest eine erste Struktur eine Verbundstruktur (110, 111, 112, 113, 114) ist, die eine Sandwich-Verbundplatte (1) enthält, die aus einer ersten Haut (10) und einer zweiten Haut (11) beiderseits eines Kerns (12) besteht, **dadurch gekennzeichnet, dass** die erste Struktur zumindest einen Fortsatz von einem Rand der Sandwich-Verbundplatte enthält, der aus einem monolithischen Teil gebildet ist, das eine Einzelwand (101, 102, 103, 104, 105, 106) bildet, die die Sandwich-Verbundplatte über eine Befestigungskante der Platte hinaus fortsetzt, wobei die Einzelwand eine komplementäre Platte mit bezüglich der Sandwich-Verbundplatte (1) reduzierter Dicke bildet, wobei die Einzelwand (101) der ersten Struktur auf eine Fläche (11") der anderen der Strukturen in einem Abstand von einem Verbindungsteil (130) zwischen den Strukturen aufgebracht ist, wobei die Einzelwand so geformt ist, dass sie sich von der Fläche weg erstreckt und einen Kanal (202, 203) oder einen Kasten bildet, dessen Wände aus der Einzelwand und der Fläche (11") der anderen der Strukturen gebildet sind.

2. Anordnung von Strukturen nach Anspruch 1, wobei die Einzelwand aus einer der Häute (10) der Sandwich-Verbundplatte gebildet ist, die sich über den Rand der Sandwich-Verbundplatte hinaus fortsetzt.

3. Anordnung von Strukturen nach Anspruch 1, wobei das monolithische Teil aus einem Fortsatz der beiden miteinander verbundenen Häute (10, 11) der Sandwich-Verbundplatte gebildet ist.

4. Anordnung von Strukturen nach Anspruch 3, wobei der Fortsatz aus einer Plattenrandrückführung (17) zur Haut stammt, wobei die Häute (10, 11) aufeinandergelegt und miteinander verbunden sind und als Basis für die Ausbildung der Einzelwand (101, 102, 103, 104, 105, 106) dienen.

5. Anordnung von Strukturen nach Anspruch 4, wobei die Rückführung (17) zur Haut eine Stütz- und/oder Befestigungskante der Struktur bildet und sich fortsetzt, um die Einzelwand zu bilden.

6. Anordnung von Strukturen nach einem der vorhergehenden Ansprüche, wobei die Sandwich-Verbundplatte zumindest ein Profil (6) zwischen den Häuten aufweist, das dazu ausgelegt ist, ein oder mehrere Befestigungsglieder eines komplementären Strukturelements aufzunehmen.

7. Anordnung von Strukturen nach einem der vorhergehenden Ansprüche, wobei die Sandwich-Verbundplatte zumindest ein Verstärkungselement (13) zum Abschluss der Platte am Rand der Sandwich-Verbundplatte enthält.

8. Anordnung von Strukturen nach einem der vorhergehenden Ansprüche, enthaltend zumindest zwei Verbundstrukturen (110, 111, 112, 113, 114), die jeweils mit einer Sandwich-Verbundplatte (1) und einer Einzelwand (101, 102, 103, 104, 105, 106) versehen sind, die eine erste Haut (10) der Sandwich-Verbundplatte fortsetzt, wobei die Einzelwand jeder der ersten und der zweiten Struktur auf die zweite Haut (11) der Sandwich-Verbundplatte der anderen der Strukturen aufgebracht ist, und wobei ein Kasten (201) zwischen den Abschlüssen der Sandwich-Verbundplatten und den Einzelwänden ausgebildet ist.

9. Anordnung von Strukturen nach Anspruch 8, wobei zumindest die Sandwich-Verbundplatte einer ersten der Strukturen zumindest einen Einsatz (6, 13) zwischen ihren Häuten (10, 11) aufweist, wobei die Einzelwand einer zweiten der Verbundstrukturen durch die zweite Haut (11) der ersten der Verbundstrukturen hindurch an dem Einsatz befestigt ist.

10. Anordnung von Strukturen nach einem der vorhergehenden Ansprüche, wobei die zweite der Strukturen eine Sandwich-Verbundplatte enthält, die mit zumindest einem Profil (6) versehen ist, wobei die Einzelwand durch eine Haut der Sandwich-Verbundplatte der zweiten der Strukturen hindurch an dem Profil befestigt ist.

## Claims

1. An assembly of structures (110, 111, 112, 113, 114, 300, 400) at least one first structure of which is a composite structure (110, 111, 112, 113, 114) including a sandwich composite panel (1), consisting of a first skin (10) and second skin (11) on either side of a core (12), **characterised in that** said first structure includes at least one extension of an edge of the sandwich composite panel made by a monolithic part forming a single wall (101, 102, 103, 104, 105, 106) as an extension of the sandwich composite panel beyond a panel fastening border, said single wall forming an additional panel with a reduced thickness relative to the sandwich composite panel (1) for which said single wall (101) of said first structure is applied to a face (11") of the other of the structures at a distance from a joining part (130) between said structures, said single wall being shaped to move away from said face and make a conduit (202, 203) or a box the walls of which are formed of said single wall and said face (11") of the other of the structures.

2. The assembly of structures according to claim 1, for which said single wall is made by one of the skins (10) of the sandwich composite panel which extends beyond the edge of the sandwich composite panel.

3. The assembly of structures according to claim 1, for which the monolithic part is made by an extension of both skins (10, 11) of the sandwich composite panel joined together.

4. The assembly of structures according to claim 3, for which the extension is the result of a panel edge skin return (17), the skins (10, 11) being applied to each other and secured to each other and acting as a base for making said single wall (101, 102, 103, 104, 105, 106).

5. The assembly of structures according to claim 4, for which said skin return (17) forms a bearing and/or fastening border for the structure and extends therefrom to form said single wall.

6. The assembly of structures according to any of the previous claims, for which the sandwich composite panel includes at least one profile (6) between the skins adapted to receive one or more members for fastening an additional structure element.

7. The assembly of structures according to any of the previous claims, for which the sandwich composite panel includes at least one panel termination reinforcing element (13) at the edge of the sandwich composite panel.

8. The assembly of structures according to any of the previous claims, including at least two composite structures (110, 111, 112, 113, 114) each provided with a sandwich composite panel (1) and with a single wall (101, 102, 103, 104, 105, 106) as an extension of a first skin (10) of said sandwich composite panel, for which the single wall of each of the first and second structures applies to the second skin (11) of the sandwich composite panel of the other of the structures, and for which said box (201) is made between the terminations of said sandwich composite panels and said single walls.

9. The assembly of structures according to claim 8, for which at least the sandwich composite panel of a first of said structures includes at least one insert (6, 13) between its skins (10, 11), the single wall of a second of said composite structures being fastened to said insert through the second skin (11) of said first of said composite structures.

10. The assembly of structures according to any of the previous claims, for which the second of the structures includes a sandwich composite panel provided with at least one profile (6), said single wall being fastened to said profile through a skin of the sandwich composite panel of the second of the structures.
